# EUROPEAN PATENT APPLICATION

(11) **EP 3 745 561 A1**
(43) Date of publication of application: **02.12.2020**
(21) Application number: 18901729.6
(22) Date of filing: 22.01.2018
(51) Int. Cl.: H02K 3/28

(54) **COMBINED POWER MOTOR**

(71) Applicant: Zhang, Shixing, Beijing 100102 (CN); Zhang, Hao, Beijing 100102 (CN)
(72) Inventor: Zhang, Shixing, Beijing 100102 (CN); Zhang, Hao, Beijing 100102 (CN)
(74) Representative: Vitina, Maruta
(86) International application number: PCT/CN2018/000025
(87) International publication number: WO 2019/140541

(57) **Abstract**

A combined power motor, relating to motor manufacturing and motor control, including a casing, a composite rotor, a composite stator, a plurality of independent stator windings and a plurality of power terminal sets, where the composite rotor consists of a plurality of coaxial independent rotors, and the composite stator consists of a plurality of independent stators. Each independent stator has a plurality of independent stator windings, and each independent stator winding is provided with a power terminal set. An intelligent controller controls on-off of a plurality of winding switches corresponding to the stator windings according to load signals of sensors, motor operating status information and parameters of each independent stator winding, thereby realizing the soft start, soft stop and variable power operation of the combined power motor, and obtaining a power-saving effect without harmonic interference and pollution to the power supply. In addition, the combined power motor is further provided with a sound-light alarm and communication ports for connection with a computer or a smart grid.

## Description

### TECHNICAL FIELD

The present application relates to motor manufacturing and control technologies, and more particularly to a combined power motor.

### BACKGROUND

Induction motors, also known as squirrel cage asynchronous motors (referred to as electric motors collectively) are the most widely used and most power-consuming electric equipment in the art, due to their advantages of low cost, simple structure and reliable operation. Unfortunately, the induction motors also have some serious defects, such as large starting current, low operating efficiency and low power factor at light load or no load.

In the motor manufacturing technology in the prior art and patent publications associated with the motor manufacturing method, there is a technical solution to change a rated capacity of the motor by changing its number of electrodes and its power supply voltage. However, in the technical solution, significant change in motor structure during operation and high technical difficulty for implementation lead to high cost and unsatisfactory effects. In addition, it requires a large current to start the motor, and the power can not be automatically changed by tracking the changes in load, which further affects the promotion and the use of the motor.

Due to the characteristics of large equipment size, excessive energy consumption, low utilization, high overall cost, excessive silicon steel sheets, copper, and insulating materials waste, and failure to apply to an operation process of the motor, the auto-coupling step-down starters with a step-down starting mode is unable to meet the requirements of low carbon, energy saving and emission reduction.

The development of electronic technology has brought about soft starters and inverters using power semiconductor components, which not only have a smooth soft start function, but also are beneficial to improve a service life of the motor. However, the use of the soft starters or inverters to start the motor is prone to generate more harmonic interference, resulting in a decrease in the quality of the power supply, great harm to the power supply, and difficult governance. By contrast, the inverters for starting and controlling the motor not only have a function of soft start and soft stop, but also have a function of variable frequency speed-regulating, thereby better solving the problem of energy saving of frequently changing loads with the sensors. Therefore, these inverters are being popularized and promoted.

The Chinese Patent Publication No. 2243138Y provided a variable-capacity three-phase asynchronous motor, in which the rated capacity of the motor varies with a connection mode of the stator windings, so that the asynchronous motor works in a small capacity mode during a starting process or a operating process with light load, work in a large capacity mode during a operating process with heavy load, improving the efficiency and power factor of the motor under different loads, and saving electric energy. However, in this invention, multiple three-phase windings are connected in parallel, and arranged in a same slot with a limited volume, resulting in small number of windings and low use efficiency of the windings. Therefore, the motor in this invention has a poor performance for continuously controlling starting current or operating current and a low control accuracy.

The Chinese Patent Application Publication No.1641972A provided a variable power motor, in which the power-saving characteristics of self-variable power is actually realized through an anti-phase series connection of primary windings and secondary windings of stators and phase shift of capacitors. However, the motor is cumbersome to manufacture, and a larger capacitor is required to be internally equipped to shift phase, which is not suitable as a high-power motor. Moreover, the variable power motor in this invention fails to solve the problem of large current impact during a starting process, which leads to a limited application range.

The Chinese Patent Application Publication No.101136572A provided a double-winding asynchronous motor to reduce the high cost of AC variable frequency speed-regulating of the motor. However, power semiconductor components are further required for controlling large winding changes, which is prone to harmonic interference, and only has a speed range of 50% to 100%, so that the double-winding asynchronous motor in this invention does not have obvious advantages and promotion value.

In summary, in the above-mentioned methods for motor power saving, the motors provided with a multi-winding stator fails to optimize the stator windings, resulting in discontinuity and unsmoothness in the soft start characteristics, and a poor power saving control accuracy during operation. In addition, excessive terminals provided in these motors lead to a high cost and a complicated control. Therefore, the above-mentioned methods are not suitable for large-scale promotion.

### SUMMARY

The present disclosure provides a combined power motor, comprising:
a composite rotor 1 consisting of a plurality of coaxial independent rotors Z1, Z2, Z3...Zn;
a composite stator 2 consisting of a plurality of independent stators D1, D2, D3...Dn arranged in a casing 3;
the casing 3;
a plurality of independent power stator windings L1, L2, L3...Ln corresponding to the independent stators D1, D2, D3...Dn, respectively;
an intelligent controller 4;
a plurality of winding switches m1, m2, m3... mn corresponding to the independent stator windings L1, L2, L3...Ln, respectively; and
a plurality of power terminal sets L1u, L1v, L1w; L2u, L2v, L2w; L3u, L3v, L3w...Lnu, Lnv, Lnw to which power cords of the independent stator windings L1, L2, L3...Ln are led out;
the independent rotors, the independent stators, and the independent stator windings are basic elements of an independent motor;
wherein the independent stator windings L1, L2, L3...Ln are selected according to a geometric progression, an arithmetic progression or discrete parameters; wherein the winding switches m1, m2, m3... mn correspond to the independent stator windings L1, L2, L3...Ln respectively, thereby forming the combined power motor and a control system; the intelligent controller (4) respectively control on-off of each of the winding switches m1, m2, m3... mn after a comparison operation and a mathematical analysis between load current signals CL1, CL2 of load current sensors and operation status information.

In an embodiment, a total current of the independent stator windings L1, L2, L3...Ln of the combined power motor is a maximum rated current Ir of the motor; a plurality of rated currents Ir1, Ir2, Ir3...Irn of the independent stator windings L1, L2, L3...Ln are selected according to a geometric progression, an arithmetic progression or discrete parameters of the maximum rated current Ir to complete an optimization of processing of the rated current Ir1, Ir2, Ir3...Irn of the independent stator windings L1, L2, L3...Ln;
the independent stator windings L1, L2, L3...Ln correspond to the rated currents Ir1, Ir2, Ir3...Irn or a plurality of rated powers Pr1, Pr2, Pr3... Prn; and a mathematical optimization of processing method of the independent stator windings L1, L2, L3...Ln is also suitable for single-phase motors and multi-phase motors;
the winding switches m1, m2, m3... mn correspond to the independent stator windings L1, L2, L3...Ln respectively; parameter values of the plurality independent stator windings L1, L2, L3...Ln correspond to values of terms a1, a2, a3...an in a series, respectively; the number n of the independent stator windings is equal to the number m of the winding switches, and thus, the number n of the independent stator windings is also equal to the number m of terms in the geometric progression; a first independent stator winding L1 is a first term a1 in the geometric progression; a second independent stator winding L2 is a second term a2 in the geometric progression; a third independent stator winding L3 is a third term a3 in the geometric progression; a fourth independent stator winding L4 is a fourth term a4 in the geometric progression; and an n^{th} independent stator winding Ln is the last term an in the geometric progression; a sum of the terms in the geometric progression is equal to the maximum rated current Ir or the maximum rated power Pr of the independent stator windings, that is, a total current Ir or a total power Pr; a value of the geometric progression calculated by the mathematical analysis is a combined current of the rated currents Ir1, Ir2, Ir3...Irn or a combined power of the rated powers Pr1, Pr2, Pr3...Prn of the independent stator windings L1, L2, L3...Ln; there is a mathematically analytical relationship between the combined current I of the combined power motor and each rated current Ir1, Ir2, Ir3...Irn; and there is a mathematically analytical relationship between the combined power P of the combined power motor and each rated power Pr1, Pr2, Pr3...Prn;

If the geometric progression satisfies: the first term a1=1, a common ratio q=2, and the number of terms n=3, then a sum of the terms is equal to a1+a2+a3 = 7, a 7-level continuous regulation is obtained from 0; according to characteristic of the geometric progression, a plurality of sums of any two or more geometric progressions form a new geometric progression, so a1+a2, a2+a3, a3+a4 and a1+a3, a1+a4 are both geometric progressions; the intelligent controller 4 of the combined power motor controls on-off of each of the winding switches m1, m2, m3... mn through a mathematical analysis result according to signal values of load current sensors CL1 and CL2, which correspond to loads; and the winding switches m1, m2, m3... mn are controlled in a manual manner to meet a manual operation requirement or an automatic manner.

In an embodiment, the independent stator windings L1, L2, L3...Ln in the casing 3 of the combined power motor are connected to form a star-shaped, a delta arrangement or a combination thereof.

In an embodiment, the independent stator windings L1, L2, L3...Ln in the combined power motor are distributed to control according to the geometric progression, the arithmetic progression, and discrete parameters to improve process efficiency, reduce manufacturing cost and facilitate an optimized control of the winding switches m1, m2, m3... mn when a geometric progression with rated currents of 1/2/4 and three independent windings (n=3) is adopted, an 8-level continuous regulation from 0 to 100% is achieved using rated currents Ir0-Ir7 obtained from a mathematical analysis on a geometric series; when a geometric progression with rated currents of 1/2/4/8 and four independent windings (n=4) is adopted, a 16-level continuous regulation from 0 to 100% is achieved using rated currents Ir0-Ir15 obtained from a mathematical analysis on the geometric series;
optionally, more stator windings Ln=5, Ln=6, Ln=7... are provided to obtain a high smoothness characteristics of soft start and soft stop with geometric progression and a high control accuracy of the combined power motor; the number of the winding switches mn and the number n of the terms of the geometric progression need to be adjusted synchronously, and more output ports of a single-chip microcomputer are required;
the rated currents Ir1, Ir2, Ir3...Irn of the independent stator windings L1, L2, L3...Ln are selected according to a geometric progression, an arithmetic progression or discrete parameters of the total rated current Ir, respectively, to analyze more power levels or current levels with less independent stator windings L1, L2, L3...Ln, thereby achieving functions of soft start and soft stop and a dynamic adjustment characteristics upon automatic tracking of a load transforming power during operation, and obtaining a power-saving effect without harmonic interference and pollution to the power supply.

In an embodiment, the independent winding switches m1, m2, m3... mn of the combined power motor are relays, contactors or electronic switching elements, and are connected to a computer control system or a smart grid by expanding communication ports.

In an embodiment, a plurality of output pins for controlling the stator windings in the single-chip microcomputer IC1 of the intelligent controller respectively output a corresponding sequence term an corresponding to the geometric progression, the arithmetic progression or the discrete parameters, wherein the number of sequence terms a1, a2, a3...an correspond to a first relay J1, a second relay J2, a third relay J3... and an n^{th} relay Jn.

In an embodiment, the intelligent controller 4 consists of a signal conditioning circuit with the single-chip microcomputer IC1 as a control core, the load current sensors CL1 and CL2, an operating state parameter display, a keyboard, a drive circuit and a communication interface circuit; wherein the winding switches m1, m2, m3...mn are controlled to switch according to a current signal of at least one of the load current sensors CL1 and CL2; an operating program of the single-chip microcomputer IC1 of the intelligent controller comprises instructions for switching the winding switches m1, m2, m3... mn, which is generated from mathematical operation analysis and data processing according to the load current signals, each winding rated current, winding parameters of the motor input in advance, so as to control on-off of the winding switches m1, m2, m3... mn to achieve a tracking characteristics of the load current; therefore, when the combined power motor is at a small load current, the motor is automatically switched to low-power or low-current windings to reduce a total output power of the motor, so that an output power of the motor is always matched to a size of the load to save energy.

In an embodiment, the combined power motor with a geometric progression with three independent stator windings (n=3) after the mathematical analysis realizes an 8-level continuous regulation from 0 to 100%, wherein the regulation rate increases from 0 to 100% by 14.3%, or decreases from 100% to 0 by 14.3%, which is incomparable in a star-delta starting method and an auto-coupling step-down starting method, and already meet general soft-start requirements in engineering.

In an embodiment, the combined power motor with a geometric progression with four independent stator windings (n=4) obtains a 16-level continuous regulation (1/2/4/8) from 0 to 100%, wherein the regulation rate increases from 0 to 100% by 6.7%, or decreases from 100% to 0 by 6.7%; in addition, if more independent stator windings are provided, nearly continuous dynamic control characteristics is obtained, and higher control requirements of soft start, soft stop and automatically change power to track load changes are satisfied, thereby achieving a power-saving effect.

In an embodiment, if there are four same independent power winding (n=4), a 16-level control is obtained according to a mathematical analysis of the geometric progression; a 10-level control is obtained according to a mathematical analysis of the arithmetic progression; and only a 4-level control is obtained according to the four same power windings; therefore, it is difficult to obtain a high-precision control performance and and ideal energy-saving effect without an optimized control of the independent stator windings L1, L2, L3...Ln. The combined power motor of the present invention without high-current semiconductor components does not generate high-order harmonic interference and does not pollute the power source, thereby saving electric energy, protecting the environment and reducing carbon emissions

In an embodiment, in order to give full play to the power control characteristics of the combined power motor and develop its soft start and soft stop functions, the intelligent controller adopts an electronic control system with the single-chip microcomputer IC1 as the control core, wherein the electronic control system comprises a load current detector, a display, a keyboard, the winding switches m1, m2, m3...mn and a drive circuit.

In an embodiment, there is at least one group of load current signal to switch and control the winding switches in the intelligent controller 4; wherein the winding switches are automatically controlled by the switch control signal output by the software program in a program memory of the single-chip microcomputer IC1, and then the winding switches m1, m2, m3......mn completes a switching of the independent stator windings L1, L2, L3...Ln in the combined power motor to realize energy-saving operation; therefore, when the load is light, the combined power motor automatically switches to low power and low current windings to save energy and makes the combined power motor always work at an optimal efficiency and an optimal power factor; the operating program of the single-chip microcomputer IC1 of the intelligent controller is provided for sending switch instructions of the winding switches m1, m2, m3... mn after mathematical operation analysis and data processing according to the load current signal, combined rated current parameters of the independent stator windings L1, L2, L3...Ln, to realize a tracking characteristics of the load current and achieve an optimization of motor efficiency.

### BRIEF DESCRIPTION OF THE DRAWINGS

FIG. 1 is an arrangement diagram of a plurality of rotors in a combined power motor according to an embodiment of the present disclosure.
FIG. 2 is an arrangement diagram of a plurality of stators in the combined power motor according to the embodiment of the present disclosure.
FIG. 3 is an arrangement diagram of a plurality of stator windings in the combined power motor according to the embodiment of the present disclosure.
FIG. 4 shows a circuit of an intelligent controller according to an embodiment of the present disclosure.
FIG. 5 is a flow chart of a main program according to an embodiment of the present disclosure.
FIG. 6 is a flow chart of an interrupt processing program according to an embodiment of the present disclosure.
FIG. 7 is a flow chart of a keyboard scanning program according to an embodiment of the present disclosure.
FIG. 8 is a flow chart of an A/D conversion program according to an embodiment of the present disclosure.
FIG. 9 is a flow chart of an update display program according to an embodiment of the present disclosure.
FIG. 10 is a flow chart of an operation control program according to an embodiment of the present disclosure.
FIG. 11 is a flow chart of a key-value processing program according to an embodiment of the present disclosure.

### DETAILED DESCRIPTION OF EMBODIMENTS

The present disclosure will be further described in detail below with reference to the accompanying drawings and specific embodiments. It should be noted that any solution based on a principle of the present disclosure should fall into the scope of the present disclosure.

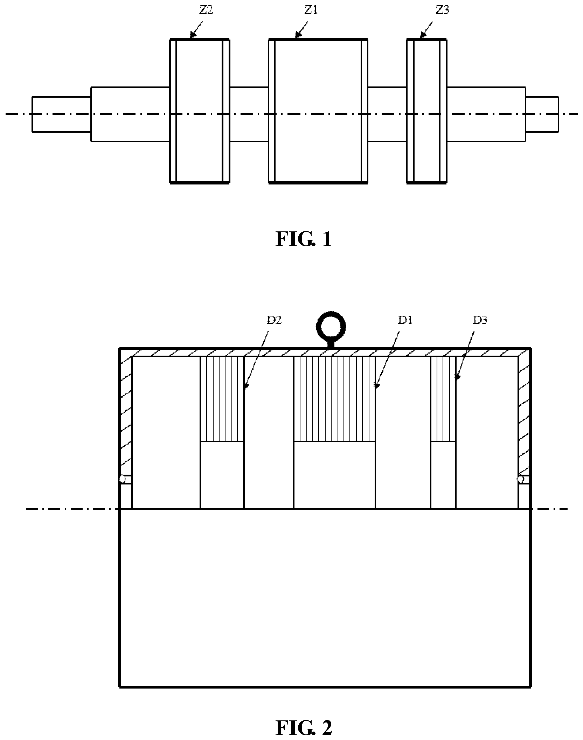

FIG. 1 is an arrangement diagram of a plurality of rotors in a combined power motor, where there are three independent rotors Z1, Z2, Z3 arranged in a same motor shaft.

FIG. 2 is an arrangement diagram of a plurality of stators in the combined power motor, where three stators D1, D2, D3 corresponding to the three independent rotors arranged in a casing of the combined power motor, and the three stators D1, D2, D3 respectively combined with the three independent rotors to form three independent motor rotating magnetic circuit systems.

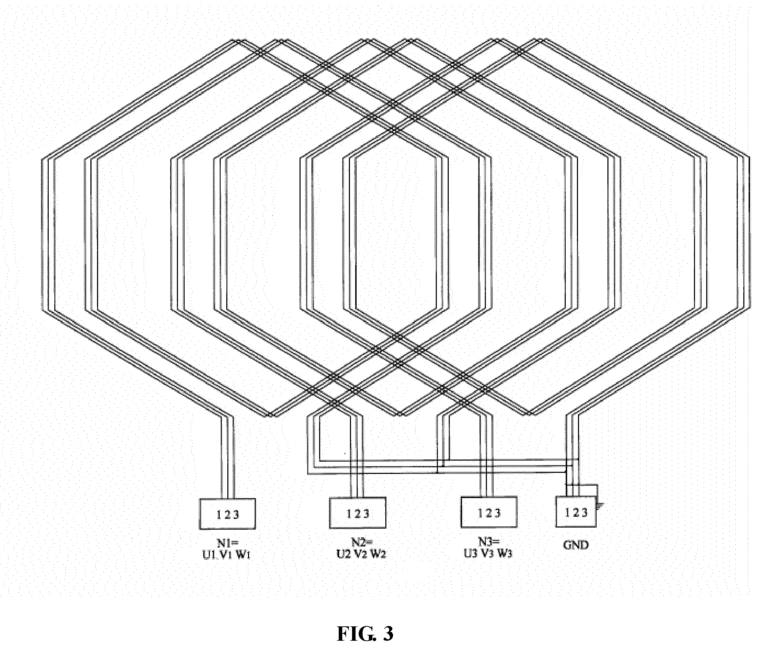

FIG. 3 is an arrangement diagram of a plurality of stator windings in the combined power motor, where there are three independent stator windings L1, L2, L3 respectively arranged in the three independent stators D1, D2, D3, and the three independent stator windings can be configured as a star connection structure, a delta connection structure, a mixed connection structure or a multi-winding connection structure. The three independent windings can be distributed according to the geometric progression of three rate powers, or according to a geometric progression of three rated current Ir, and then the power terminals of each of the three independent stator windings L1, L2, L3 are respectively led out to a corresponding terminal of the combined power motor, and then an output of the intelligent controller 4 controls the three contactors m1, m2, m3 to regulate on-off state of the three independent windings, so as to achieve an 8-level soft start, soft stop and dynamic tracking load power saving economic operation.

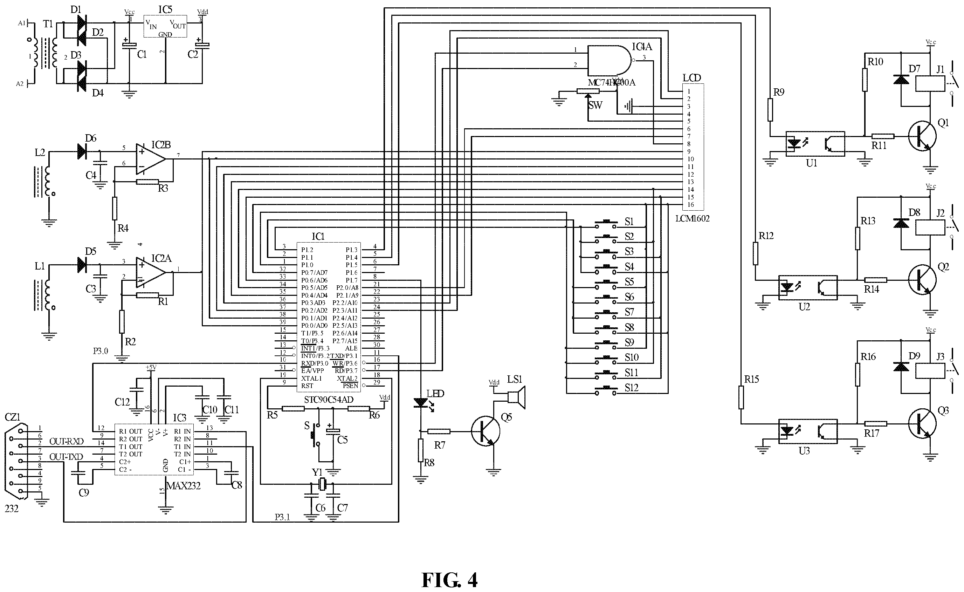

In the FIG. 4, the intelligent controller 4 is a typical single-chip microcomputer control system with a single-chip microcomputer IC1 as a core, which is composed of a power supply, a display, a keyboard, a communication port, an alarm circuit and a load drive circuit. The single-chip microcomputer IC1 can adopt a typical 80C51 series single-chip microcomputer, or other series single-chip microcomputer similar performance. The single-chip microcomputer IC1 includes an MCU microprocessor, an EEPROM program memory, a SRAM data memory, a multi-channel A/D converter, a multi-group I/O port and serial communication port arranged insides, and a regulated power supply, a display, a keyboard, a communication port, an alarm circuit and a load drive circuit arranged outsides.

Specifically, the load drive circuit in FIG. 4 is composed of three photoelectrically isolated relay circuits, and the switch contacts of the three relays can directly drive the three contactors in three groups of independent windings, thereby realizing a combined switching of the three independent windings of the combined power motor. the stator windings L1, L2, L3 of the combined power motor are distributed according to a geometric progression with a ratio of 1/2/4 of the maximum rated current Ir, thereby realizing an 8-level soft start, soft stop and tracking load conversion power operation, which can meet the general industrial control requirements. Moreover, a regulation of the rated currents Ir1∼ Ir7 in the working state can also obtain a relatively high-precision resolution ability, so as to obtain better no-load and light-load power saving effects.

A working power supply of the intelligent controller 4 is composed of a transformer T1, a first diode D1, a second diode D2, a third diode D3, a fourth diode D4, a first filter capacitors C1, a second filter capacitors C2 and an integrated voltage regulator IC5, where a DC drive power Vcc is obtained from the first filter capacitor C1, and a regulated operating power Vdd is obtained from the second filter capacitor C2.

One end of each of the load sensors CL1 and CL2 is grounded, and the other ends of the load sensors CL1 and CL2 are respectively connected to the negative electrodes of a fifth diode D5 and a sixth diode D6. The positive electrodes of the fifth diode D5 and the sixth diode D6 are respectively connected to the non-inverting terminals of the amplifiers IC2A and IC2B, and the inverting terminals of the amplifiers IC2A and IC2B adjust the gain via a feedback network composed of a first resistor R1, a second resistor R2, a third resistor R3, and a fourth resistor R4. The output terminals of the amplifiers IC2A and IC2B are respectively connected to a terminal AD0 and a terminal AD1 in the A/D converter of the single-chip microcomputer IC1. The working power supply Vdd is connected to a fifth capacitor C5 and a button RS via a sixth resistor R6, and the other end of the fifth capacitor C5 and the button RS is grounded to form a reset circuit of the single-chip microcomputer IC1, where a reset signal is transmitted to a RST pin of the single-chip microcomputer IC1 via the fifth resistor R5. A main oscillator circuit of the single-chip microcomputer IC1 is formed by a crystal Y1, a sixth capacitor C6, a seventh capacitor C7, where two ends of the crystal Y1 are respectively connected to a XTAL1 pin and a XTAL2 pin of the single-chip microcomputer IC1. An alarm signal output from the P1.7 port of the single-chip microcomputer IC1 respectively passes through a light-emitting diode LED, a seventh resistor R7, an eighth resistor R8, a base of a fifth transistor Q5, a collector of the fifth transistor Q5 and a buzzer LS1, and finally reaches the working power supply Vdd to complete a sound-light alarm, where the emitters of the eighth resistor R8 and the fifth transistor Q5 are grounded.

The ports P0.0∼P0.7 of the single-chip microcomputer IC1 are directly connected to a data port of a LCD screen to transmit the display data. A WR pin and a RD pin of the single-chip microcomputer IC1 are respectively connected to an input terminal of a NAND gate IC4 and an output terminal of the NAND gate IC4 to connect a pin E of the LCD screen. A CSA pin and a CSB pin of the LCD screen are respectively connected to the ports P2.2 and P2.3 of the single-chip microcomputer IC1. A RS pin and a R/W pin of the LCD screen are respectively connected to the ports P2.0 and P2.1 of the single-chip microcomputer IC1. A pin V0 of the LCD screen is connected to a midpoint of the potentiometer SW to adjust the contrast of the LCD screen.

The ports P0.4 ∼ 0.7 of the single-chip microcomputer IC1 are further configured as the signal output terminals of a keyboard to connect to a first button S1, a fifth button S5, a second button S2, a sixth button S6, a third button S3, a seventh button S7, a fourth button S4 and a eighth button S8, where the first button S1, the second button S2, the third button S3, the fourth button S4 are connected to a port P 1.0 of the single-chip microcomputer IC1, and the fifth button S5, the sixth button S6, the seventh button S7, the eighth button S8 are connected to the port P1.1 of the single-chip microcomputer IC1. A RXD pin of the single-chip microcomputer IC1 is connected to an OUT pin R1 of a RS232 serial interface chip IC3; a TXD pin of the single-chip microcomputer IC1 is connected to an IN pin T1 of the RS232 serial interface chip IC3; and the OUT pin T1 of the RS232 serial interface chip IC3 is connected to a second pin 2 of a serial interface socket CZ1 of the intelligent controller 4, and the IN pin R1 of the RS232 serial interface chip IC3 is connected to a third pin 3 of the serial interface socket CZ1 of the intelligent controller 4. A fifth pin 5 of the serial interface socket CZ1 is grounded; the pins C2+, C2- of the RS232 serial interface chip IC3 are connected to a ninth capacitor C9; the pins C1+, C1- of the RS232 serial interface chip IC3 are connected to an eighth capacitor C8; the pins V-,V+ of the RS232 serial interface chip IC3 are grounded respectively through a tenth capacitor C10 and an eleventh capacitor C11; and a Vcc pin of the RS232 serial interface chip IC3 is connected to the working power supply Vdd.

The pins P1.3, PI.4, and P1.5 of the single-chip microcomputer IC1 are respectively connected to the positive electrodes of light-emitting diodes in a first photocoupler U1, a second photocouplers U2 and a third photocoupler U3 through a ninth resistor R9, a twelfth resistor R12, and a fifth resistor R15, and the negative electrodes of the light-emitting diodes in in the first photocoupler U1, the second photocouplers U2 and the third photocoupler U3 are grounded. A collector of a triode in the first photocoupler U1 is respectively connected to the operating power supply Vdd and a base of the first triode Q1 through the tenth resistor R10 and the eleventh resistor R11; the collector of the first triode Q1 is connected to the working power supply Vdd through a forward seventh diode D7 and the first relay J1; and an emitter of the first triode Q1 is grounded. A collector of a triode of the second photocoupler U2 is respectively connected to the operating power supply Vdd and a base of the second transistor Q2 through a thirteen resistor R13 and a fourth resistor R14; the collector of the second transistor Q2 is connected to the working power supply Vdd through a forward eighth diode D8; and an emitter of the second transistor Q2 is grounded. A collector of a triode of the third photocoupler U3 is respectively connected to the working power supply Vdd and a base of the third triode Q3 through a sixteenth resistor R16 and a seventeenth resistor R17; the collector of the third triode Q3 is connected to the working power supply Vdd through a forward ninth diode D9 and the third relay J3; and an emitter of the third transistor Q3 is grounded.

If necessary, more single-chip microcomputer IC1 ports are provided to expand the drive relay circuit to obtain more windings of the combined power motor, and improve the smooth start and stop characteristics of soft start and soft stop, and light load control accuracy.

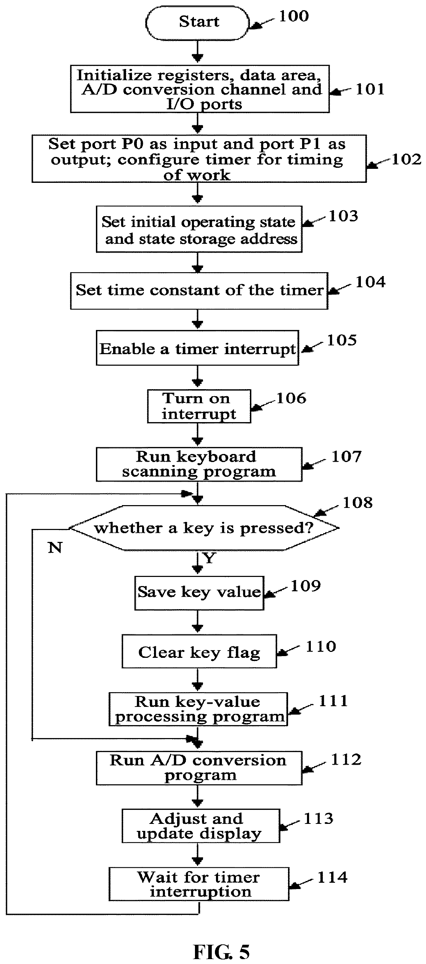

The software program of the single-chip microcomputer IC1 of the intelligent controller 4 mainly includes a main program, an interrupt processing program, a keyboard scanning program, an A/D conversion program, an operation control program including soft start and soft stop, an update display program, a key-value processing program and a clock program. FIGS. 5-11 illustrate a flow chart of the program operating in a program memory of the single-chip microcomputer IC1 of the intelligent controller 4 shown in FIG. 4, where the microprocessor automatically starts to execute the main program after power-on or reset.

As shown in FIG. 5, the main program is executed as follows.

After the initial step 100, execute step 101 to initialize registers, a data area, an A/D conversion channel, and I/O ports; execute step 102 to set the port P0 as an input, port P1 as an output, and configure the timer 1 for timing of work; execute step 103 to set an initial operating state and a state storage address; execute step 104 to set the time constant of the timer 1; execute step 105 to enable a timer interrupt; execute step 106 to turn on the interrupt; execute step 107 to run the keyboard scanning program; execute step 108 to determine whether a key is pressed.

If a key is pressed, execute step 109 to save the key value; execute step 110 to clear a key flag; execute step 111 to run the key-value processing program; execute step 112 to run the A/D conversion program; execute step 113 to adjust and update the display; go to step 114 and wait for the timer interruption; jump to step 108 to determine whether a key is pressed.

If no key is pressed, jump to step 112 to run the A/D conversion program; execute step 113 to adjust the update display; go to step 114, and then return to step 108 to execute circularly.

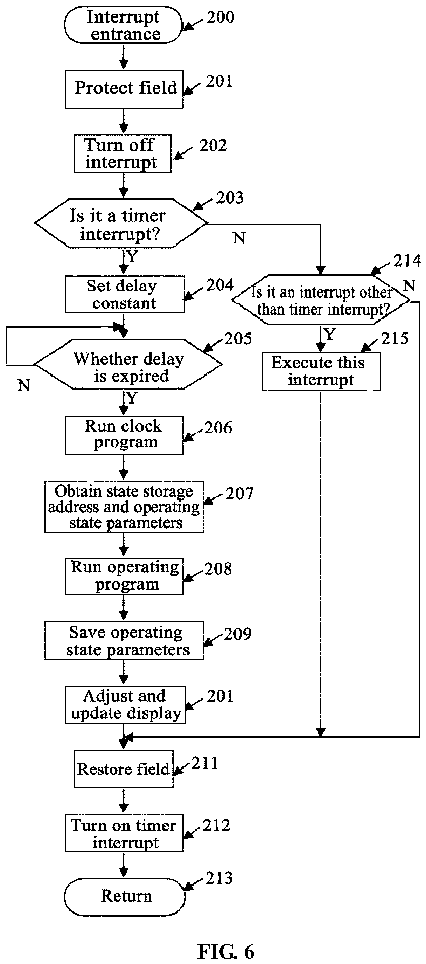

As shown in FIG. 6, the interrupt processing program is executed as follows.

After the initial step 200, execute step 201 to protect the field; execute step 202 to turn off the interrupt; execute step 203 to determine whether the interrupt is a timer interrupt.

If the interrupt is a timer interrupt, execute step 204 to set the delay constant; execute step 205 to determine whether the delay is expired. If the delay is not expired, execute step 205 repeatedly and wait. If the delay is expired, execute step 206 to run the clock program; execute step 207 to obtain the state storage address and the operating state parameters; execute step 208 to run the operating program; execute step 209 to save the operating state parameters; execute step 210 to adjust and update the display; execute step 211 to restore the field; execute step 212 to turn on the timer interrupt; execute step 213 to return. In step 203, if the interrupt is not a timer interrupt, execute step 214 to determine whether the interrupt is other interrupt.

If the interrupt is other interrupt, execute step 215 to execute other interrupt; execute step 211 to restore the scene; execute step 212 to turn on the timer interruption; execute step 213 to return.

Otherwise, jump directly to step 211 to restore the scene; execute step 212 to turn on the timer interrupt; and execute step 213 to return.

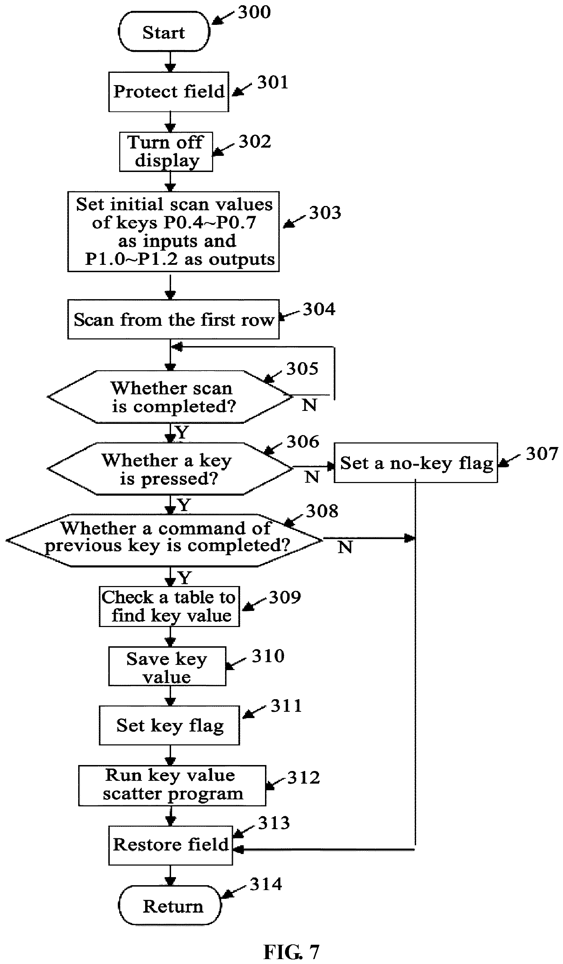

As shown in FIG. 7, the keyboard scanning program is executed as follows.

After the initial step 300, execute step 301 to protect the field; execute step 302 to turn off the display; execute step 303 to set the initial scan values of the keys, set P.04∼P0.7 as inputs, and set P1.0∼P1. 2 as outputs; execute step 304 to scan from the first row; execute step 305 to determine whether the scan is completed.

If the scan is not completed, repeat step 305. If the scan is completed, execute step 306 to determine whether a key is pressed. If no key is pressed, execute step 307 to set a no-key flag; jump to step 313 to restore the field; execute step 314 to return. If a key is pressed, execute step 308 to determine whether a command of the previous key is completed. If the command of the previous key is not completed, skip to step 313 to restore the field; execute step 314 to return. If the command of the previous key is completed, execute step 309 to check the table to find a key value; execute step 310 to save the key value; execute step 311 to set a key flag; execute step 312 to run a key value scatter program; execute step 313 to restore the field; and execute step 314 to return.

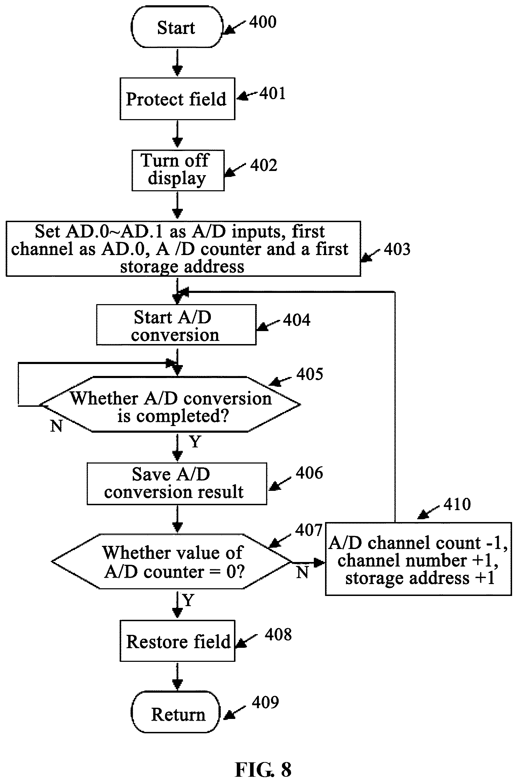

As shown in FIG. 8, the A/D conversion program is executed as follows.

After the initial step 400, execute step 401 to protect the field; execute step 402 to turn off the display; execute step 403 to set AD.0∼AD.1 as A/D inputs, where the first channel is AD.0; set an A/D counter and a first storage address; execute step 404 to start the A/D conversion; execute step 405 to determine whether the A/D conversion is completed.

If the A/D conversion is not completed, repeat step 405. If the A/D conversion is completed, execute step 406 to save the A/D conversion result; execute step 407 to determine whether the value of the A/D counter = 0.

If the value of the A/D counter = 0, execute step 408 to restore the field; execute step 409 to return. If the value of the A/D counter ≠ 0, execute step 410 to set that A/D channel count -1, channel number +1, storage address +1; and jump back to step 404 to execute again to determine the A/D channel count.

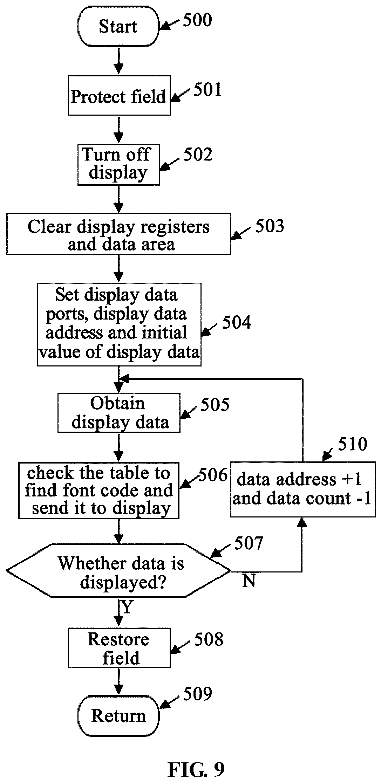

As shown in FIG. 9, the update display program is executed as follows.

After the initial step 500, execute step 501 to protect the field; execute step 502 to turn off the display; execute step 503 to clear the display registers and data area; execute step 504 to set the display data ports, the display data address, and the initial value of the display data; execute step 505 to obtain the display data; execute step 506 to check the table to find the font code and send it to display; execute step 507 to determine whether the data is displayed.

If the data is not displayed, execute step 510 to set that data address +1 and data count -1; return to step 505 to obtain the display data.

If the data is not displayed, execute step 508 to restore the field; and execute step 509 to return.

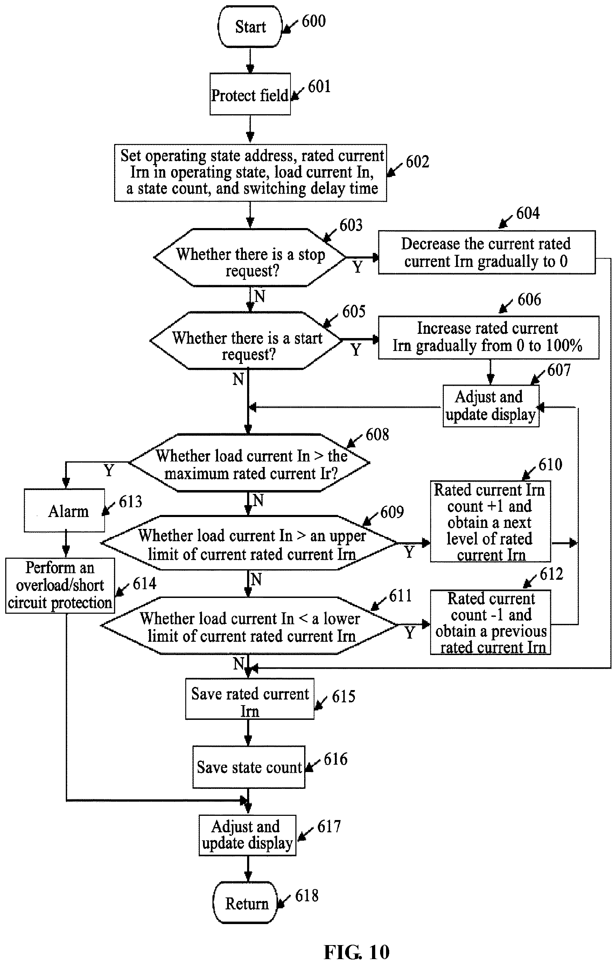

As shown in FIG. 10, the operation control program is executed as follows.

After the initial step 600, execute step 601 to protect the field; execute step 602 to set the operating state address, the rated current Irn in the operating state, the load current In, a state count, and the switching delay time; execute step 603 to determine whether there is a stop request.

If there is a stop request, execute step 604 to reduce the current rated current Irn gradually to 0; jump to step 615 to save the rated current Irn; execute step 616 to save the state count; execute step 617 to adjust and update the display; and execute step 618 to return.

If there is no stop request, execute step 605 to determine whether there is a start request. If there is a start request, execute step 606 to increase the rated current Irn gradually from 0 to 100%; execute step 607 to adjust and update the display; execute step 608 to determine whether the load current In > the maximum rated current Ir. If the load current In > the maximum rated current Ir, execute step 613 to start an alarm; execute step 614 to perform an overload/short circuit protection processing; execute step 617 to adjust and update the display; and execute step 618 to return.

In step 608, if the test load current In □ the maximum rated current Ir, execute step 609 to determine whether the load current In > an upper limit of the current rated current Irn. If the load current In > the upper limit of the current rated current Irn, execute step 610 to set that the rated current Irn counts +1 and obtain a next level of rated current Irn; execute step 607 to adjust and update the display; jump back to step 608 to determine whether the load current In > the maximum rated current Ir.

In step 609, if the load current In ≯ the upper limit of the current rated current Irn, execute step 611 to determine whether the load current In < a lower limit of current rated current Irn. If the load current In < the lower limit of the current rated current Irn, execute step 612 to set that the rated current counts -1, obtain a previous rated current Irn; jump back to step 607 to adjust and update the display; return to step 608 to determine whether the load current In > the maximum rated current Ir. In step 611, if the load current In ≮ the lower limit of the current rated current Irn, execute step 615 to save the rated current Irn; execute step 616 to save the state count; execute step 617 to adjust and update the display; and execute step 618 to return.

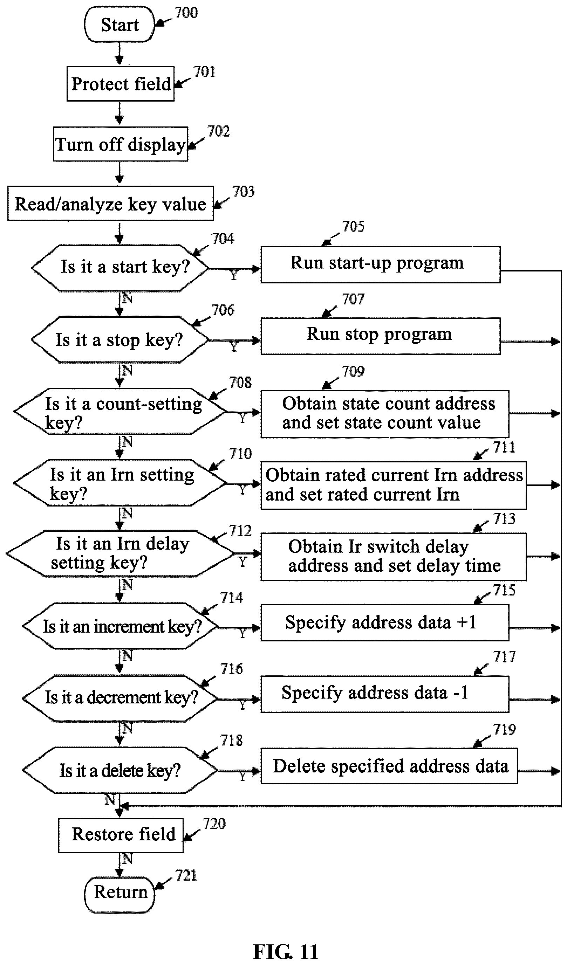

As shown in FIG. 11, the key-value processing program is executed as follows.

After the initial step 700, execute step 701 to protect the field; execute step 702 to turn off the display; execute step 703 to read/analyze the key value; execute step 704 to determine whether the key is a start key. If the key is the start key, execute step 705 to run a start-up program; execute step 720 to restore the field; and execute step 721 to return.

In step 704, if the key is not the start key, execute step 706 to determine whether the key is a stop key. If the key is the stop key, execute step 707 to run a stop program; execute step 720 to restore the field; and execute step 721 to return.

In step 706, if the key is not the stop key, execute step 708 to determine whether the key is a count-setting key. If the key is the count-setting key, execute step 709 to obtain the state count address and set the state count value; execute step 720 to restore the field; and execute step 721 to return.

In step 708, if the key is not the count-setting key, execute step 710 to determine whether the key is an Irn setting key? If the key is the Irn setting key, execute step 711 to obtain the rated current Irn address and set the rated current Irn; execute step 720 to restore the field; and execute step 721 to return.

In step 710, if the key is not the Irn setting key, execute step 712 to determine whether the key is an Irn delay setting key. If the key is the Irn delay setting key, execute step 713 to obtain the Irn switch delay address and set the delay time; execute step 720 to restore the field; and execute step 721 to return.

In step 712, if the key is not the Irn delay setting key, execute step 714 to determine whether the key is an increment key. If the key is the incremental key, execute step 715 to set that the specify address data +1; execute step 720 to restore the field; and execute step 721 to return.

In step 714, if the key is not the incremental key, execute step 716 to determine whether the key is a decrement key. If the key is the decrement key, execute step 717 to set that the specify address data -1; execute step 720 to restore the field; and execute step 721 to return.

In step 716, if the key is not the decrement key, execute step 718 to determine whether the key is a delete key. If the key is the delete key, execute step 719 to delete the specified address data; execute step 720 to restore the field; and execute step 721 to return.

## Claims

1. A combined power motor, comprising:
a composite rotor (1) consisting of a plurality of coaxial independent rotors (Z1, Z2, Z3...Zn);
a composite stator (2) consisting of a plurality of independent stators (D1, D2, D3...Dn) that are arranged in a casing (3);
the casing (3);
a plurality of independent power stator windings (L1, L2, L3...Ln) corresponding to the independent stators (D1, D2, D3...Dn), respectively;
an intelligent controller (4);
a plurality of winding switches (m1, m2, m3... mn) corresponding to the independent stator windings (L1, L2, L3...Ln), respectively; and
a plurality of power terminal sets (L1u, L1v, L1w); (L2u, L2v, L2w); (L3u, L3v, L3w)...(Lnu, Lnv, Lnw) to which power cords of the independent stator windings (L1, L2, L3...Ln) are led out;
the independent rotors, the independent stators and the independent stator windings being basic elements of an independent motor; **characterized in that**:
the independent stator windings (L1, L2, L3...Ln) are selected according to a geometric progression, geometric progression or discrete parameters; wherein the winding switches (m1, m2, m3... mn) correspond to the independent stator windings (L1, L2, L3...Ln) respectively, thereby forming the combined power motor and a control system; the intelligent controller (4) respectively control on-off of each of the winding switches (m1, m2, m3... mn) after a comparison operation and a mathematical analysis between load current signals (CL1, CL2) of load current sensors and operation status information.

2. The combined power motor according to claim 1, **characterized in that** a total current of the independent stator windings (L1, L2, L3...Ln) of the combined power motor is a maximum rated current (Ir) of the motor; a plurality of rated currents (Ir1, Ir2, Ir3...Irn) of the independent stator windings (L1, L2, L3...Ln) are selected according to a geometric progression, an arithmetic progression or discrete parameters of the maximum rated current (Ir) to complete optimization of processing of the rated currents (Ir1, Ir2, Ir3...Irn) of the independent stator windings (L1, L2, L3...Ln);
the independent stator windings (L1, L2, L3...Ln) correspond to the rated currents (Ir1, Ir2, Ir3...Irn) or a plurality of rated powers (Pr1, Pr2, Pr3... Prn); and a mathematical optimization of processing of the independent stator windings (L1, L2, L3...Ln) is also suitable for single-phase motors and multi-phase motors;
the winding switches (m1, m2, m3... mn) correspond to the independent stator windings (L1, L2, L3...Ln) respectively; parameter values of the plurality independent stator windings (L1, L2, L3...Ln) correspond to values of terms (a1, a2, a3...an) in a series, respectively; the number (n) of the independent stator windings is equal to the number (m) of the winding switches, and thus, the number (n) of the independent stator windings is also equal to the number (m) of terms in the geometric progression; a first independent stator winding (L1) is a first term (a1) in the geometric progression; a second independent stator winding (L2) is a second term (a2) in the geometric progression; a third independent stator winding (L3) is a third term (a3) in the geometric progression; a fourth independent stator winding (L4) is a fourth term (a4) in the geometric progression; and an n^{th} independent stator winding (Ln) is the last term (an) in the geometric progression; a sum of the terms in the geometric progression is equal to the maximum rated current (Ir) or the maximum rated power (Pr) of the independent stator windings, that is a total current (Ir) or a total power (Pr); a value of the geometric progression calculated by the mathematical analysis is a combined current of the rated currents (Ir1, Ir2, Ir3...Irn) or a combined power of the rated powers (Pr1, Pr2, Pr3...Prn) of the independent stator windings (L1, L2, L3...Ln); there is a mathematically analytical relationship between the combined current (I) of the combined power motor and each rated current (Ir1, Ir2, Ir3...Irn); and there is a mathematically analytical relationship between the combined power (P) of the combined power motor and each rated power (Pr1, Pr2, Pr3...Prn);
if the geometric progression satisfies: the first term a1=1, a common ratio q=2, and the number of terms n=3, then a sum of the terms is equal to (a1+a2+a3=7), and a 7-level continuous regulation is obtained from 0; according to characteristics of the geometric progression, a plurality of sums of any two or more geometric progressions form a new geometric progression, so(a1+a2), (a2+a3), (a3+a4), and (a1+a3), (a1+a4) are both geometric progressions; the intelligent controller (4) of the combined power motor controls on-off of each of the winding switches (m1, m2, m3... mn) though a mathematical analysis result according to signal values of the load current sensors (CL1, CL2) which correspond to loads; and the winding switches (m1, m2, m3... mn) are controlled in a manual manner to meet a manual operation requirement or an automatic manner.

3. The combined power motor according to claim 1, **characterized in that** the independent stator windings (L1, L2, L3...Ln) in the casing (3) of the combined power motor are connected to form a star-shaped, a delta arrangement or a combination thereof.

4. The combined power motor according to claim 1, **characterized in that** the independent stator windings (L1, L2, L3...Ln) in the combined power motor are distributed to control according to the geometric progression, the arithmetic progression, or the discrete parameters to improve process efficiency, reduce manufacturing cost and facilitate an optimized control of the winding switches (m1, m2, m3... mn); when a geometric progression with rated currents of 1/2/4 and three independent windings (n=3) is adopted, an 8-level continuous regulation from 0 to 100% is achieved using rated currents (Ir0-Ir7) obtained from a mathematical analysis on a geometric series; when a geometric progression with rated currents of 1/2/4/8 and four independent windings (n=4) is adopted, a 16-level continuous regulation from 0 to 100% is achieved using rated currents (Ir0-Ir15) obtained from a mathematical analysis on the geometric series;
optionally, more stator windings (Ln=5, Ln=6, Ln=7...) are provided to obtain a high smoothness characteristics of soft start and soft stop with geometric progression and a high control accuracy of the combined power motor; the number of the winding switches (mn) and the number of the terms (n) of the geometric progression need to be adjusted synchronously, and more output ports of a single-chip microcomputer are required;
the rated currents (Ir1, Ir2, Ir3...Irn) of the independent stator windings (L1, L2, L3...Ln) are selected according to a geometric progression, an arithmetic progression or discrete parameters of the total rated current (Ir), respectively, to analyze more power levels or current levels with less independent stator windings (L1, L2, L3...Ln), thereby achieving functions of soft start and soft stop and a dynamic adjustment characteristics upon automatic tracking of a load transforming power during operation, and obtaining a power-saving effect without harmonic interference and pollution to the power supply.

5. The combined power motor according to claim 1, **characterized in that** a plurality of output pins for controlling the stator windings in the single-chip microcomputer (IC1) of the intelligent controller (4) respectively output a corresponding sequence term (an) corresponding to the geometric progression, the arithmetic progression or the discrete parameters, wherein the sequence terms (a1, a2, a3...an) correspond to a first relay (J1), a second relay (J2), a third relay (J3)... and an n^{th} relay (Jn), respectively.

6. The combined power motor according to claim 1, **characterized in that** the independent winding switches (m1, m2, m3... mn) of the combined power motor are relays, contactors or electronic switching elements, and are connected to a computer control system or a smart grid by expanding communication ports.

7. The combined power motor according to claim 1, **characterized in that** the intelligent controller (4) consists of a signal conditioning circuit with the single-chip microcomputer (IC1) as a control core, the load current sensors (CL1, CL2), an operating state parameter display, a keyboard, a drive circuit and a communication interface circuit; wherein the winding switches (m1, m2, m3...mn) are controlled to switch according to a current signal of at least one of the load current sensors (CL1, CL2); an operating program of the single-chip microcomputer (IC1) of the intelligent controller comprises instructions for switching the winding switches (m1, m2, m3... mn), which is generated from mathematical operation analysis and data processing according to the load current signals, each winding rated current, winding parameters of the motor input in advance, so as to control on-off of the winding switches (m1, m2, m3... mn) to achieve a tracking characteristics of the load current; therefore, when the combined power motor is at a small load current, the motor is automatically switched to low-power or low-current windings to reduce a total output power of the motor, so that an output power of the motor is always matched to a size of the load to save energy.
